# NOUVEAU FASCICULE DE BREVET EUROPEEN

(11) **EP 0 021 936 B2**
(45) Date de publication et mention de la décision concernant l'opposition: **30.08.1995**
(45) Mention de la délivrance du brevet: 14.12.1983
(21) Numéro de dépôt: 80400824.1
(22) Date de dépôt: 09.06.1980
(51) Int. Cl.: C04B 35/66, C04B 35/48

(54) **Nouvelles compositions réfractaires non façonnées utiles comme compositions de jointoiement et à mouler**
Zum Verbinden und Formen geeignete feuerfeste Zusammensetzungen
Refractory compositions suitable for jointing and moulding

(30) Priorité: 11.06.1979 FR 7914860
(43) Date de publication de la demande: 07.01.1981
(73) Titulaire: SOCIETE EUROPEENNE DES PRODUITS REFRACTAIRES, F-92400 Courbevoie (FR)
(72) Inventeur: Guigonis, Jacques, F-84320 Entraigues (FR); Jeanvoine, Pierre, F-84310 Morieres les Avignon (FR)
(74) Mandataire: De Boisse, Louis (FR)

(56) Documents cités:
- DE-A- 2 424 167
- DE-A- 2 442 830
- DE-A- 2 731 612
- DE-B- 2 534 353
- FR-A- 1 191 665
- FR-A- 1 208 577
- FR-A- 2 000 881
- FR-A- 2 120 566
- FR-A- 2 183 604
- FR-A- 2 363 535
- FR-A- 2 390 400
- FR-E- 75 893
- US-A- 3 060 043
- Betongen Idag, 17e Année, No. 2, Avril 1952, pages 29-31
- Glass, juillet 1977, pages 256-258
- Keramisch Gebundene Chrom-Korunch-Steine in der Glasindustrie, P. Boggum, Sammelband XIth International Congress on Glass, 1977, pages 115-123
- Glass, octobre 1979, pages 388 et 390

## Description

L'invention concerne de nouvelles compositions réfractaires non-façonnées à base de grains d'oxydes fondus et coulés comportant une phase vitreuse, qui sont utiles comme compositions de jointoiement et comme compositions à mouler.

L'industrie du verre utilise généralement pour la construction de ses fours des produits réfractaires fondus et coulés, ou agglomérés, de grande pureté, très résistants à la corrosion par le verre. Cependant, pour essayer de rendre étanches certaines parties des fours à verre vis-à-vis de l'infiltration du verre fondu qui entraîne certains phénomènes de corrosion, il est nécessaire d'utiliser des matériaux réfractaires non façonnés pour jointoyer les blocs en produits réfractaires. Ce problème se pose tout particulièrement au niveau des soles des fours à verre où ce dernier s'infiltre dans les joints existant entre les dalles en produits réfractaires fondus et coulés, ou agglomérés, vient corroder les matériaux réfractaires utilisés pour former la couche sous-jacente (chappe) aux dalles, puis attaque les dalles elles-mêmes par en dessous par un mécanisme de corrosion remontante, dénommé en anglais "upward drilling".

L'idée générale de rendre étanche la sole du four à verre est décrite dans le brevet français n° 818 571 qui propose, à cette fin, l'emploi d'une matière de jointoiement granulaire constituée de grains réfractaires libres exempts de liant, qui ne fait prise, par frittage in situ que lorsque le four atteint sa température de service.

La solution proposée dans ce brevet français n'a pas eu, toutefois, un grand succès du fait de la difficulté de mettre en place la matière de jointoiement dans les joints qui peuvent être de très petite dimension.

On connaît, par ailleurs, par le brevet français 2 363 535, des compositions réfractaires pouvant comprendre, en poids, une proportion majeure de grains réfractaires formés de cristaux de corindon et de zircone liés par une phase vitreuse et contenant comme constituants principaux du ZrO₂, de l'Al₂O₃ et du SiO₂ ou du ZrO₂, de l'Al₂O₃, du SiO₂ et du Cr₂O₃; et une proportion mineure d'alumine ou d'oxyde de chrome d'une grosseur de particules inférieure à 0,043 mm. Une petite quantité de silice colloïdale peut également être incluse dans les compositions à titre de liant. Il faut noter que ce brevet ne décrit pas l'emploi d'un ciment hydraulique ni de grains vraiment très fins. En outre, l'emploi de silice colloïdale à titre de liant, s'il est bien adapté à la production d'articles frittés, ne conviendrait pas à la fabrication de compositions de jointoiement du fait de la gélification qui se produit en présence d'eau.

Il est connu, enfin, par le brevet français 2 000 881, de mélanger des particules ou morceaux de déchets à base d'oxydes réfractaires électrofondus avec un ciment hydraulique afin d'obtenir un mélange agglomérable.

Aucun de ces deux brevets ne donne, toutefois, d'ensignements relatifs à la production de compositions de jointoiement.

L'invention a pour objet de fournir une composition réfractaire non façonnée utile comme matière de jointoiement, en particulier des joints entre les dalles de la sole d'un four à verre, ainsi que pour le fabrication par moulage d'articles réfractaires crus ou cuits.

L'invention concerne une composition réfractaire non façonnée, caractérisée en ce qu'elle consiste essentiellement, en poids, en:
(a) 55 à 98% de particules d'un matériau réfractaire fondu et coulé contenant au moins 4% d'une phase vitreuse endogène et dont la composition contient, comme constituants principaux, du ZrO₂, de l'Al₂O₃ et du SiO₂, ou du ZrO₂, de l'Al₂O₃, du SiO₂ et du Cr₂O₃;
(b) 1 à 5% d'un ciment hydraulique;
(c) 1 à 15% d'une charge constituée de particules d'une grosseur de 100 Å (0,01 µm) à 5 µm sensiblement sphériques, d'un oxyde de métal, la surface spécifique de ces particules étant supérieure à 5 m²/g;
(d) 0 à 25% de fines particules d'une grosseur inférieure à 40 microns choisies parmi les particules de zircone, d'alumine, d'oxyde de chrome Cr₂O₃, de produits réfractaires fondus et coulés dont la composition chimique comprend, en poids, 75-85% ZrO₂, 2-8% SiO₂, 9-17% Al₂O₃, 0,5-0,7% autres oxydes, et leurs mélanges,
la proportion de chacun des constituants (a), (b), (c) et (d) étant donnée par rapport au total des ingrédients (a), (b), (c) et (d); et
(e) 0,01 à 1% d'un agent tensio-actif par rapport au poids total des constituants (a), (b), (c) et (d).

Le constituant (a) forme 55 à 98% en poids de la composition de l'invention. De préférence, il constitue au moins 75% de ladite composition. Avantageusement, les particules de constituant (a) ont des grosseurs inférieures ou égales à 5 mm.

Comme exemples de constituant (a) utilisables, on peut citer les suivants:
- La famille des produits dénommés "oxydés" présentant la composition en poids suivante, sur la base des oxydes:
   ZrO₂=32,5 à 54%
   Al₂O₃=36 à 51%
   SiO₂=2 à 16%
   Na₂O=0,28 à 1,5%
   autres oxydes < 1,5%
   et préparés par le procédé décrit dans le brevet français n° 1 208 577 et son addition n° 75 893. De tels produits sont fabriqués en vendus par la demanderesse sous les dénominations commerciales ER 1681 (Produit 1 du Tableau 1) et ER 1711 (Produit 2 du Tableau 1).
- La famille de produits à haute teneur en zircone décrits dans le brevet français n° 1 191 665 et présentant la composition en poids suivante, sur la base des oxydes:
   ZrO₂=75 à 85%
   SiO₂=2 à 8%
   Al₂O₃=9 à 17%
   autres oxydes=0,5 à 0.7%
   Un produit préféré de ce genre est le produit n° 4 du Tableau 1.
- La famille de produits décrits dans le brevet français n° 2 183 604 dont la composition en poids, sur la base des oxydes, est, par exemple, la suivante:
   Cr₂O₃=1 à 74%
   ZrO₂=15 à 40%
   Al₂O₃=3 à 76%
   SiO₂=7,5 à 20%
   Na₂O=0,4 à 2,5%
   le rapport SiO₂/Na₂O étant compris entre 8 et 18.
   Un produit de ce type est le produit n° 3 du Tableau 1.

Cette liste ne doit pas être considérée comme limitative, d'autres produits réfractaires à base de ZrO₂, Al₂O₃ et SiO₂ ou à base de Al₂O₃, SiO₂, ZrO₂ et Cr₂O₃ pouvant être utilisés du moment qu'ils contiennent une phase vitreuse. La demanderesse a en effet trouvé que la présence d'une telle phase vitreuse améliore les propriétés mécaniques des matériaux préparés à partir des compositions de l'invention et facilite la liaison des joints avec les blocs de produits réfractaires au cours de l'attrempage du four à verre.

Des exemples particuliers de produits convenant comme constituant (a) sont donnés dans le Tableau 1 ci-dessous.

**TABLEAU 1**

| Composition chimique et cristallographique | Produit n° 1 | Produit n° 2 | Produit n° 3 | Produit n° 4 |
|---|---|---|---|---|
| Al₂O₃ -% en poids | 50,6 | 45,9 | 28,3 | 15 |
| ZrO₂ -% en poids | 32,5 | 40,8 | 28,0 | 80 |
| SiO₂ -% en poids | 15,7 | 12,3 | 14,5 | 5 |
| Cr₂O₃ -% en poids | - | - | 28,0 | - |
| Na₂O -% en poids | 1,1 | 0,8 | 1,1 | - |
| Fe₂O₃ -% en poids | 0,1 | 0,1 | 0,1 | 0,1 |
| TiO₂ -% en poids | 0,1 | 0,1 | 0,1 | 0,1 |
| Phase vitreuse-% en poids | 21 | 16 | 20 | 4-5 |
| Phase cristalline-% en poids | 79 | 84 | 80 | 95-96 |
| Comportant du | Corindon | Corindon | Solution solide | Corindon |
| | Zircone | Zircone | Zircone | Zircone Mullite |

Le constituant (a) est utilisé sous forme d'un mélange de particules de diverses grosseurs dont la composition granulométrique est adaptée à l'utilisation finale envisagée. Ainsi, on a trouvé commode de préparer les quatre classes granulométriques suivantes de particules du constituant (a) par broyage et tamisage:
1. Les grains (grosseurs de 2 à 5 mm environ)

| Ouverture de tamis en micromètres | Refus cumulés % en poids | |
|---|---|---|
| | maxi | mini |
| 5000 | 10 | 0 |
| 4000 | 35 | 10 |
| 3150 | 60 | 40 |
| 2000 | 95 | 75 |
| 1600 | 100 | 95 |

2. La grainette (grosseurs de 0,5 à 2 mm environ)

| Ouverture des tamis en micromètres | Refus cumulés % en poids | |
|---|---|---|
| | maxi | mini |
| 2000 | 10 | 0 |
| 1600 | 30 | 10 |
| 800 | 90 | 70 |
| 400 | 100 | 95 |

3. La farine (grosseurs de 40 µm à 0,5 mm environ)

| Ouverture des tamis en micromètres | Refus cumulés % en poids | |
|---|---|---|
| | maxi | mini |
| 500 | 10 | 0 |
| 400 | 25 | 5 |
| 250 | 45 | 25 |
| 100 | 75 | 55 |
| 40 | 90 | 70 |

4. Les fines (grosseurs inférieures à 40 µm environ)

| Diamètre des particules en micromètres | Pourcentage cumulé en poids | |
|---|---|---|
| | maxi | mini |
| 20-40 | 15 | 0 |
| 10-20 | 35 | 0 |
| 5-10 | 60 | 20 |
| 1-5 | 80 | 35 |
| 0,5-1 | 100 | 70 |
| <0,5 | 100 | 80 |

Selon l'épaisseur des joints à boucher, on mélangera deux ou plusieurs de ces classes granulométriques dans des proportions appropriées, la composition granulométrique devant être d'autant plus fine que l'épaisseur du joint est plus petite. Ainsi, on a trouvé que pour boucher des joints d'une épaisseur inférieure à 10 mm, on pouvait utiliser avec de bons résultats un constituant (a) formé de 35 à 100% de fines (4) et de 0 à 65% de farine (3); pour des joints d'une épaisseur de 10 à 25 mm, on pouvait utiliser un constituant (a) formé de 30 à 60% de grainette (2), de 15 à 30% de farine (3) et de 0 à 40% fines (4); et pour des joints d'une épaisseur supérieure à 25 mm, on pouvait utiliser un constituant formé de 15 à 45% de grains (1), 20 à 40% de grainette (2), 15 à 30% de farine (3) et 0 à 40% de fines (4). Cette dernière composition granulométrique convient bien aussi à la fabrication d'articles par moulage. Bien entendu, on pourrait utiliser des classes granulométriques dont les limites seraient sensiblement différentes de celles indiquées ci-dessus.

Le constituant (b) constitue 1 à 5% en poids de la composition, de préférence 1 à 4% en poids. Le ciment hydraulique (b) peut être, par exemple, un ciment Portland classique ou un ciment alumineux comme ceux du type ciment fondu ou du type superlamineux. On préfère utiliser un ciment superalumineux, tel que le Secar® 250 ou l'Alcoa® CA25, afin de minimiser la quantité de chaux apportée par le ciment. La chaux (CaO) tend, en effet, à réduire la résistance à la corrosion par le verre du matériau (a).

Le constituant (c) constitue 1 à 15% en poids de la composition, de préférence 3 à 7%. Le constituant (c) est formé de particules très fines, sensiblement sphériques, d'un oxyde métallique, choisi parmi la silice, l'alumine, l'oxyde de chrome Cr₂O₃ et la zircone, la surface spécifique de ces particules étant supérieure a 5 m²/g. On préfère tout-particulièrement à ce jour utiliser des particules de silice vitreuse d'une grosseur de 100 Å à 5 µm appelées également "fumée de silice". Cette silice vitreuse a une teneur en SiO₂ d'au moins 98%, le complément pouvant être formé de Na₂O, Al₂O₃ ou ZrO₂, et se présente sous la forme de microsphères. Les particules de silice de ce genre sont bien connues et disponibles dans le commerce. Pour des raisons éconimiques, on a trouvé avantageux d'utiliser les particules de silice vitreuse obtenues par réduction thermique du silicate de zirconium en zircone et condensation.

La présence du constituant (c) permet de réduire la quantité d'eau nécessaire pour rendre coulables les compositions de l'invention. Il semble que les très fines particules du constituant (c) agissent en venant se loger dans les pores de très petit diamètre (inférieur à 1 µm) permettent aux particules du constituant (a) de glisser ou rouler les unes sur les autres, améliorant ainsi la coulabilité de la composition et permettant aussi d'obtenir un entassement plus compact des particules constituant la composition avec l'obtention concomitante d'une meilleure liaison entre ces dernières dans le produit final.

Le constituant facultatif (d) qui constitue 0 à 25%, de préférence 6 à 25%. en poids de la composition, peut être ajouté à la composition pour améliorer la résistance à la corrosion des compositions de l'invention au niveau des particules d'une grosseur inférieure à 100 µm et dans lesquelles se trouve concentrée la porosité. Le constituant (d) est formé de particules ou de mélanges de particules d'une grosseur inférieure à 40 µm, de préférence inférieure à 15 µm, formées de ZrO₂, d'Al₂O₃, de Cr₂O₃ ou d'un matériau réfractaire fondu et coulé dont la composition chimique comprend, en poids, 75-85% ZrO₂, 2-8% SiO₂, 9-17% Al₂O₃ et 0.5-0,7% autres oxydes. Par particules de ZrO₂, d'Al₂O₃ ou de Cr₂O₃, on veut dire des particules dont la composition chimique contient au moins 98% en poids de ZrO₂, d'Al₂O₃ ou de Cr₂O₃.

Les fines particules du constituant (d) viennent remplir les pores de petits diamètres existant entre les particules plus grossières présentes dans la composition et, du fait qu'elles sont constituées d'un matériau présentant une résistance élevée à la corrosion par le verre fondu, renforcent la résistance globale des particules fines présentes dans la composition. La somme des pourcentages des constituants (a) à (d) est égale à 100%.

Le constituant (e) est présent à raison de 0.01 à 1% par rapport au poids des constituants (a) à (d), et est constitué d'un agent tensio-actif dont le rôle est de modifier les propriétés rhéologiques de la composition de jointoiement préparé à partir de la composition de l'invention, la faisant passer d'un comportement binghamien à un comportement newtonien, facilitant ainsi le remplissage des joints de faible épaisseur par simple coulée de cette composition de jointoiement sur les joints. La nature de l'agent tensio-actif n'est pas critique. On peut utiliser, par exemple, des polycarboxylates de sodium, des polyphosphates de métaux alcalins à longue chaîne, du polyacrylate de sodium, etc.. De nombreux agents tensio-actifs utilisables sont disponibles dans le commerce. On peut citre, par exemple, le Giltex® E (polyphosphate de sodium à longue chaîne vendu par Rhône-Poulenc).

Lorsqu'on désire mettre en oeuvre les compositions de l'invention, on les mélange intimement avec une quantité d'eau comprise entre 3 et 25%, de préférence entre 4 et 10% en poids par rapport au poids total des constituants (a) à (d).

Comme on l'a dit, les compositions de l'invention sont utiles comme compositions de jointoiement, c'est-à-dire pour remplir des joints entre des blocs ou dalles en matériau réfractaire fondu et coulé formant le garnissage de fours à verre. Les compositions comprenant des grains (2 à 5 mm) de constituant (a) sont utiles aussi pour réaliser la chape supportant de tels blocs ou dalles.

Les compositions de l'invention peuvent servir aussi à fabriquer des pièces de forme simple, telles que des briques, par pressage mécanique, ou des pièces de forme plus compliquée par coulée et vibration. Les caractéristiques des pièces peuvent être améliorées en opérant un dégazage, en effectuant la coulée sous vide, etc. si on le désire.

Les exemples non limitatifs ci-après sont donnés en vue d'illustrer l'invention.

### Exemple I

On prépare trois compositions A, B et C selon l'invention ayant les compositions indiquées au tableau 2. Pour tester ces compositions, il est nécessaire de les mettre en forme et de les cuire. La mise en forme se fait dans des moules selon les techniques conventionnelles afin d'obtenir par exemple des pièces de forme parallélipipédique dans lesquelles on prélèvera selon les normes en usage les échantillons nécessaires pour en mesurer certaines propriétés physiques et le comportement à la corrosion par les verres. Les mesures citées dans les divers exemples sont effectuées d'une part après séchage à 110°C pendant 24 heures puis après cuisson à 1500°C pendant au moins 5 heures afin d'assurer un frittage correct des particules.

L'essai de corrosion par les verres est un essai dynamique décrit par J. Recasens, A. Sevin et M. Gardiol au 8ème Congrès International du Verre, Londres 1968. Cet essai consiste à mesurer le volume de matière enlevé par corrosion sur des éprouvettes cylindriques animées d'un mouvement de rotation dans un bain de verre sodocalcique à 1400°C pendant 3 jours. Les matériaux du Tableau 2 ont un bon comportement dans cet essai où, à titre de témoins, on utilise une éprouvette D en produit réfractaire fondu et coulé ayant la composition du produit n° 1 du Tableau 1 et une éprouvette E obtenue par moulage d'un ciment réfractaire ayant la composition chimique suivante, en % en poids: 15% de ZrO₂, 77% d'Al₂O₃, 1% de SiO₂, 0,1% de Fe₂O₃, 2,4% de P₂O₅, et présentant une perte au feu de 4,5%.

Les résultats obtenus sont les suivants:

| | Eprouvettes | | | | |
|---|---|---|---|---|---|
| | D | E | A | B | C |
| Volume corrodé, cm³ | 3,6 | 18 | 6,6 | 7,2 | 9 |
| Indice de corrosion, en % | 100 | 20 | 54 | 50 | 40 |

Ces résultats montrent que les compositions de l'invention donnent des produits ayant une résistance à la corrosion par le verre fondu qui est égale à environ la moitié du matériau fondu et coulé D, ce qui représente une performance excellente pour une composition destinée à être utilisée comme composition de jointoiement.

Les compositions A, B et C (du fait de leur facilité de mise en oeuvre), sont particulièrement utiles pour remplir des joints d'une épaisseur inférieure à 15 mm, comprise entre 15 et 25 mm, et supérieure à 25 mm, respectivement. Après avoir été chauffées à 1400°C pendant un temps suffisant pour être frittées, les compositions A, B et C, remplissant les joints, adhèrent aux blocs ou dalles en matériau fondu et coulé adjacents, s'opposant efficacement ensuite aux infiltrations de verre fondu.

Des pièces façonnées à partir des compositions A, B et C du Tableau 2 présentent également une résistance remarquable, après frittage à 1500°C pendant 7 heures, à l'abrasion par des agents agressifs tels que le sable, le corindon et le coke.

### Exemple II

On prépare, comme à l'exemple I, des éprouvettes ayant la composition F suivante, en % en poids:-

| | |
|---|---|
| Grainette (0,5-2 mm) du produit n° 3 du Tableau 1 | 30 |
| Farine (40 µm-0,5 mm) du produit n° 3 du Tableau 1 | 20 |
| Fines (<40 µm) du produit n° 3 du Tableau 1 | 17 |
| Alumine (0-30 µm, diamètre médian: 6 µm) | 10 |
| Oxyde de chrome (0-15 µm, diamètre médian: 4,5 µm) | 14 |
| Silice vitreuse (100 Å-5 µm, diamètre médian 0,7 µm) | 5 |
| Ciment alumineux (Secar 250) | 4 |
| Agent tensio-actif (polyacrylate de sodium). | 0,3 |
| Eau de mise en oeuvre, en % | 5 |

| Propriétés après séchage à 110°C | |
|---|---|
| Masse volumique apparente, en g/cm³ | 2,90 |
| Porosité ouverte, % en volume | 13 |
| Résistance à la flexion à la température ambiante, en kg/cm² | 60 |
| Résistance à la compression à la température ambiante, en kg/cm² | 180 |

| Propriétés après cuisson à 1500°C | |
|---|---|
| Masse volumique apparente, en g/cm³ | 3,13 |
| Porosité ouverte, % en volume | 3,0 |
| Résistance à la flexion à la température ambiante, en kg/cm² | 370 |
| Résistance à la compression à la température ambiante, en kg/cm² | 1950 |

La résistance à la corrosion dans le même essai que celui décrit dans l'exemple I donne les résultats suivants:-

| | D | F |
|---|---|---|
| Volume de la corrosion, en cm³ | 3,6 | 2 |
| Indice de corrosion, en % | 100 | 180 |

Ces résultats montrent que la composition de l'exemple II présente une résistance à la corrosion par le verre fondu exceptionnelle, mais a tendance à colorer le verre, ce qui peut être un inconvénient rédhibitoire dans certains cas.

### Exemple III

On prépare, comme à l'exemple I, des éprouvettes ayant la composition G suivante, en % en poids:-

| | |
|---|---|
| Farine (40 µm-0,5 mm) de produit n° 2 du Tableau 1 | 50 |
| Fines (<40 µm) de produit n° 2 du Tableau 1 | 33 |
| Zircone (0-20 µm, diamètre médian: 3,4 µm) | 10 |
| Silice vitreuse (100 Å-5 µm) | 5 |
| Ciment alumineux (Secar 250) | 2 |
| Polyphosphate alcalin à longue chaîne | 0,1 |
| Eau de mise en oeuvre en % | 9 |

Les éprouvettes formées à partir de cette composition G présentent un indice de corrosion égal à 60 par le verre fondu supérieur à celle de la composition A dans l'essai décrit dans l'exemple I; la résistance à la corrosion est inférieure à celle de la composition F de l'exemple II, mais elle présente l'avantage de ne pas colorer le verre.

| Propriétés après séchage à 110°C | |
|---|---|
| Masse volumique apparente, en g/cm³ | 3,0 |
| Porosité ouverte, % en volume | 20 |
| Résistance à la flexion à la température ambiante, en kg/cm² | 20 |
| Résistance à la compression à la température ambiante, en kg/cm² | 80 |

| Propriétés après cuisson à 1500°C | |
|---|---|
| Masse volumique apparente, en g/cm³ | 2,95 |
| Porosité ouverte, % en volume | 17 |
| Résistance à la flexion à la température ambiante, en kg/cm² | 255 |
| Résistance à la compression à la température ambiante, en kg/cm² | 2100 |

Cette composition G est utile notamment comme composition de jointoiement de joints d'une épaisseur inférieure à 15 mm.

### Exemple IV

On prépare, comme à l'exemple I, des éprouvettes ayant la composition H suivante, en % en poids:-

| | |
|---|---|
| Grains (2-5 mm) du produit n° 4 du Tableau 1 | 20 |
| Grainette (0,5-2 mm) du produit n° 4 du Tableau 1 | 30 |
| Farine (40 µm-0,5 mm) du produit n° 4 du Tableau 1 | 24 |
| Fines (<40 µm) du produit n° 4 du Tableau 1 | 17 |
| Ciment alumineux (Secar 250) | 4 |
| Silice vitreuse (100 Å-5 µm) | 5 |
| Polyphosphate alcalin à longue chaîne | 0,1 |
| Eau de mise en oeuvre, en % | 4,5-5 |

| Propriétés après séchage à 110°C | |
|---|---|
| Masse volumique apparente, en g/cm³ | 3,92 |
| Porosité ouverte, % en volume | 13 |
| Résistance à la flexion à la température ambiante, en kg/cm² | 70 |
| Résistance à la compression à la température ambiante, en kg/cm² | 420 |

| Propriétés après cuisson à 1500°C | |
|---|---|
| Masse volumique apparente, en g/cm³ | 4,0 |
| Porosité ouverte, % en volume | 15 |
| Résistance à la flexion à la température ambiante, en kg/cm² | 180 |
| Résistance à la compression à la température ambiante, en kg/cm² | 650 |

Cette composition H est utile notamment comme composition de jointoiement de joints d'une épasseur de 15 à 25 mm.

### Exemple V

On prépare, comme à l'exemple I, des éprouvettes ayant la composition I suivante, en % en poids:-

| | |
|---|---|
| Grains (2-5 mm) du produit n° 1 du Tableau 1 | 20 |
| Grainette (0,5-2 mm) du produit n° 1 du Tableau 1 | 30 |
| Farine (40 µm-0,5 mm) du produit n° 1 du Tableau 1 | 24 |
| Fines (<40 µm) du produit n° 1 du Tableau 1 | 7 |
| Ciment alumineux Secar 250 | 4 |
| Alumine (0-30 µm, diamètre médian: 6 µm) | 10 |
| Silice vitreuse (100 Å-5 µm) | 5 |
| Polyphosphate alcalin à longue chaîne | 0,1 |
| Eau de mise en oeuvre, en % | 6 |

| Propriétés après cuisson à 1600°C | |
|---|---|
| Masse volumique apparente, en g/cm³ | 3,06 |
| Porosité ouverte, % en volume | 2,4 |
| Résistance à la flexion à la température ambiante, en kg/cm² | 470 |

Cette composition I est utile, notamment, pour fabriquer des articles par coulée et vibration qui, après cuisson à 1600°C, présentent une bonne résistance à l'abrasion par projection de grains de corindon.

**TABLEAU 2**

| Constituants de la composition | Composition, % en poids | | |
|---|---|---|---|
| | A | B | C |
| Grains (2-5 mm) du produit n° 1 du Tableau 1 | - | - | 20 |
| Grainette (0,5-2 mm) du Produit n° 1 du Tableau 1 | - | 55 | 30 |
| Farine (40 µm à 0,5 mm) du produit n° 1 du Tableau 1 | 50 | 15 | 24 |
| Fines (<40 µm) du produit n° 1 du Tableau 1 | 43 | 21 | 17 |
| Ciment alumineux (Secar® 250) | 2 | 4 | 4 |
| Silice vitreuse (100 Å-5 µm) | 5 | 5 | 5 |
| Polyphosphate alcalin à longue chaîne moléculaire (agent tensio-actif) | 0,1 | 0,1 | 0,1 |
| Eau de mise en oeuvre en % | 9 | 6 | 5 |

| Propriétés après séchage à 110°C | | | |
|---|---|---|---|
| Masse volumique apparente, en g/cm³ | 2,90 | 3,0 | 3,1 |
| Porosité ouverte, % en volume | 20 | 18 | 17 |
| Résistance à la flexion à la température ambiante, en kg/cm² | 20 | 100 | 150 |
| Résistance à la compression à la température ambiante, en kg/cm² | 82 | 250 | 320 |

| Propriétés après cuisson à 1500°C | | | |
|---|---|---|---|
| Masse volumique apparente, en g/cm³ | 3,0 | 3,1 | 3,2 |
| Porosité ouverte, % en volume | 11 | 9 | 7 |
| Résistance à la flexion à la température ambiante, en kg/cm² | 510 | 400 | 350 |
| Résistance à la compression à la température ambiante, en kg/cm² | 2350 | 2300 | 2100 |
| Résistance à la flexion à 1340°C, en kg/cm² | - | - | 130 |

## Revendications

1. Composition réfractaire non façonnée utile dans l'industrie verrière comme composition de jointoiement et composition à mouler,
caractérisée en ce qu'elle consiste essentiellement, en poids, en :
(a) 55 à 98% de particules d'un matériau réfractaire fondu et coulé contenant au moins 4% d'une phase vitreuse endogène et dont la composition contient, comme constituants principaux, du ZrO₂, de l'Al₂O₃ et du SiO₂, ou du ZrO₂, de l'Al₂O₃, du SiO₂ et du Cr₂O₃ ;
(b) 1 à 5% d'un ciment hydraulique ;
(c) 1 à 15% d'une charge constituée de particules d'une grosseur de 100 Å (0,01 µm) à 5 µm, sensiblement sphériques, d'un oxyde de métal, la surface spécifique de ces particules étant supérieure à 5 m²/g ;
(d) 0 à 25% de fines particules d'une grosseur inférieure à 40 µm choisies parmi les particules de zircone, d'alumine, d'oxyde de chrome Cr₂O₃, de produits réfractaires fondus et coulés dont la composition chimique comprend, en poids, 75-85% de ZrO₂, 2-8% de SiO₂, 9-17% de Al₂O₃, 0,5-0,7% d'autres oxydes, et leurs mélanges ;
la proportion de chacun des constituants (a), (b), (c) et (d) étant donnée par rapport au total des ingrédients (a), (b), (c) et (d) ; et
(e) 0,01 à 1% d'un agent tension-actif par rapport au poids total des constituants (a), (b), (c) et (d).

2. Composition selon la revendication 1, caractérisée en ce que le constituant (a) est présent à raison d'au moins 75% en poids.

3. Composition selon la revendication 1, caractérisée en ce que le constituant (b) est présent à raison de 1 à 4% en poids.

4. Composition selon la revendication 1, caractérisée en ce que le constituant (c) est présent à raison de 3 à 7% en poids.

5. Composition selon la revendication 1, caractérisée en ce que le constituant (d) est présent à raison de 6 à 25% en poids.

6. Composition selon la revendication 1, caractérisée en ce que les particules de constituant (a) ont des grosseurs inférieures ou égales à 5 mm.

7. Composition selon la revendication 1, caractérisée en ce que le constituant (a) est choisi parmi les produits réfractaires ayant les compositions chimiques suivantes, en poids:
(i) 32,5-54% de ZrO₂, 36 à 51% d'Al₂O₃, 2 à 16% de SiO₂, 0,28 à 1,5% de Na₂O, moins de 1,5% d'autres oxydes;
(ii) 75 à 85% de ZrO₂, 9 à 17% d'Al₂O₃, 2 à 8% de SiO₂, 0,5 à 0,7% d'autres oxydes; et
(iii) 1 à 74% de Cr₂O₃, 15 à 40% de ZrO₂, 3 à 76% d'Al₂O₃, 7,5 à 20% de SiO₂, et 0,4 à 2,5% de Na₂O, le rapport SiO₂/Na₂O étant compris entre 8 et 18.

8. Composition selon la revendication 1, caractérisée en ce que le constituant (c) est de la silice vitreuse.

9. Composition selon la revendication 1, caractérisée en ce qu'elle est mise en oeuvre avec addition d'une quantité d'eau comprise entre 3 et 25% en poids par rapport au poids total des constituants (a), (b), (c) et (d).

10. Composition selon la revendication 9, caractérisée en ce qu'elle se comporte comme un fluide newtonien.

## Claims

1. An unschaped refractory composition useful in the glass industry as a jointing composition and a molding composition, characterized in that it consists essentially, by weight, of:
(a) 55 to 98 % of particles of a fused cast refractory material which contains at least 4 % of an endogenous vitreous phase and the composition of which comprises, as main constituents, ZrO₂, Al₂O₃ and SiO₂ or ZrO₂, Al₂O₃, SiO₂ and Cr₂O₃;
(b) 1 to 5% of a hydraulic cement;
(c) 1 to 15 % of a filler consisting of substantially spherical particles of a metal oxide having a size of 100 Å (0,01 µm) to 5 µm the surface area of these particles being higher than 5 m²/g;
(d) 0 to 25 % of fine particles of a size less than 40 micrometers selected from the group consisting essentially of particles of zirconia, alumina, chromic oxide Cr₂O₃, fused cast refractory products the chemical composition of which comprises by weight 75-85 % ZrO₂, 2-8 % SiO₂, 9-17 % Al₂O₃; 0.5-0.7 % of the other oxides, and mixtures thereof;
the proportion of each of the constituents (a), (b), (c) and (d) being, given with respect to the total of the ingredients (a), (b), (c) and (d); and
(e) 0.01 to 1 % of a surface-active agent, with respect to the total weight of the constituents (a), (b), (c) and (d).

2. A composition as claimed in Claim 1, characterized in that the constituent (a) is present in an amount of at least 75 % by weight.

3. A composition as claimed in Claim 1, characterized in that the constituent (b) is present in an amount of 1 to 4 % by weight.

4. A composition as claimed in Claim 1, characterized in that the constituent (c) is present in an amount of 3 to 7 % by weight.

5. A composition as claimed in claim 1, characterized in that constituent (d) is present in an amount of 6 to 25 % by weight.

6. A composition as claimed in Claim 1, characterized in that particles of constituent (a) have sizes smaller than or equal to 5 mm.

7. A composition as claimed in Claim 1, characterized in that the constituent (a) is selected from the refractory products having the following chemical composition by weight:
(a) 32.5-54 % of ZrO₂, 36 to 51 % of Al₂O₃, 2 to 16 % of SiO₂, 0.28 to 1.5 % of Na₂O, less than 1.5 % of other oxides;
(b) 75 to 85 % of ZrO₂, 9 to 17 % of Al₂O₃, 2 to 8 % of SiO₂, 0.5 to 0.7 % of other oxides; and
(c) 1 to 74 % of Cr₃O₃, 15 to 40 % of ZrO₂, 3 to 76 % of Al₂O₃, 7.5 % to 20 % of SiO₂, and 0.4 to 2.5 % of Na₂O, the ratio SiO₂/Na₂O being between 8 and 18.

8. A composition as claimed in Claim 1, characterized in that the constituent (c) is vitreous silica.

9. A composition as claimed in Claim 1, characterised in that it is worked up by the addition of an amount of water comprised between 3 and 25 % by weight with respect to the total weight of the constituents (a), (b), (c) and (d).

10. A composition as claimed in Claim 9, characterized in that it behaves like a Newtonian fluid.

## Patentansprüche

1. Nicht geformte, in der Glasindustrie, als Dichtungs- und Formmasse verwendbare feuerfeste Zusammensetzung, dadurch gekennzeichnet, daß diese folgende Zusammensetzung in Gew.% aufweist :
a) 55 bis 98 % Teilchen eines feuerfesten geschmolzenen und gegossenen Materials, mit mindenstens 4 % einer glasigen Phase, deren Zusammensetzung als Hauptbestandteile ZrO₂, Al₂O₃ und SiO₂ oder ZrO₂, Al₂O₃, SiO₂ und Cr₂O₃ enthält;
b) 1 bis 5 % eines hydraulischen Zementes;
c) 1 bis 15 % eines Zuschlages, der aus wahrnehmbar kugligen Partikeln, mit einer Größe von 100 Å (0,01 µm) bis 5µm aus einem Metalloxid besteht, wobei die spezifische Oberfläche diesem Partikeln größer als 5 m²/g ist.
d) 0 bis 25 % aus feinen Partikeln mit einer Größe kleiner als 40 µm, die unter den Patikeln von Zirkonoxid, Aluminiumoxid, Chromoxid, aus geschmolzenen und gegossenen feuerfesten Produkten gewählt werden, deren chemische Zusammensetzung in Gew.% 75 bis 78% ZrO₂, 2 bis 8 % SiO₂, 9 bis 17 % Al₂O₃, 0,5 bis 0,7 weitere Oxide und ihrer Mischungen ist;
das Verhältnis jeder der Bestandteile a, b, c und d ist durch das Verhältnis der Gesamtheit der Bestandteile a, b, c und d gegeben; und
e) 0,01 bis 1 % eines spannungsaktiven Mittels in Verhältnis zum Gesamtgewicht der Bestandteile a, b, c und d.

2. Zusammensetzung nach Anspruch 1, dadurch gekennzeichnet, daß der Bestandteil a) zu mindest 75 Gew.% vorhanden ist.

3. Zusammensetzung nach Anspruch 1, dadurch gekennzeichnet, daß der Bestandteil b) zu 1 bis 4% Gew.% vorhanden ist.

4. Zusammensetzung nach Anspruch 1, dadurch gekennzeichnet, daß der Bestandteil c) zu 3 bis 7 Gew.% vorhanden ist.

5. Zusammensetzung nach Anspruch 1, dadurch gekennzeichnet, daß der Bestandteil d) zu 6 bis 25 Gew.% vorhanden ist.

6. Zusammensetzung nach Anspruch 1, dadurch gekennzeichnet, daß die Patikel des Bestandteiles a) eine Größe aufweisen, die kleiner oder gleich 5 mm beträgt.

7. Zusammensetzung nach Anspruch 1, dadurch gekennzeichnet, daß der Bestandteil a) unter den feuerfester Produkten mit folgender chemischer Zusammensetzung in Gew.% ausgwählt ist:
i) 32,5 bis 54 % ZrO₂, 36 bis 51 % Al₂O₃, 2 bis 16% SiO₂, 0,28 bis 1,5 % Na₂O, weniger als 1,5 % andere Oxide;
ii) 75 bis 85 % ZrO₂, 9 bis 17 % Al₂O₃, 2 bis 8 % SiO₂, 0.5 bis 0,7 % andere Oxide; und
iii) 1 bis 74 % Cr₂O₃, 15 bis 40 % ZrO₂, 3 bis 76 % Al₂O₃, 7,5 bis 20 % SiO₂ und 0,4 bis 2,5 % Na₂O, wobei das Verhältnis von SiO₂/Na₂O zwischen 8 und 18 liegt.

8. Zusammensetzung nach Anspruch 1, dadurch gekennzeichnet, daß der Bestandteil c) aus glasigem Siliciumoxid besteht.

9. Zusammensetzung nach Anspruch 1, dadurch gekennzeichnet, daß sie unter Zusatz einer Wassermenge von 3 und 25 Gew. % im Verhältnis zu dem Gesamtgewicht der Bestandteile a, b, c und d hergestellt wird.

10. Zusammensetzung nach Anspruch 9, dadurch gekennzeichnet, daß sie als Fluid Newtonien enthält.
